# EUROPÄISCHE PATENTANMELDUNG

(11) **EP 2 579 511 A1**
(43) Veröffentlichungstag der Anmeldung: **10.04.2013**
(21) Anmeldenummer: 11182958.6
(22) Anmeldetag: 27.09.2011
(51) Int. Cl.: H04L 12/40, H04L 12/70

(54) **Verfahren zum Betrieb eines Automatisierungsgeräts zur Priorisierung von Telegrammen und entsprechendes Datenübertragungsverfahren**

(71) Anmelder: Siemens Aktiengesellschaft, 80333 München (DE)
(72) Erfinder: Jänicke, Peter, 91058 Erlangen (DE)

(57) **Zusammenfassung**

Die Erfindung betrifft ein Datenübertragungsverfahren oder ein Verfahren zum Betrieb eines mit zumindest einem anderen Automatisierungsgerät (14) kommunikativ verbundenen Automatisierungsgeräts (12), wobei das Automatisierungsgerät (12) zumindest an das andere Automatisierungsgerät (14) über die kommunikative Verbindung Daten in Form von Telegrammen (22, 24) übermittelt, wobei sich das Verfahren dadurch auszeichnet, dass jedem Telegramm (22, 24) direkt oder indirekt eine von zumindest zwei Prioritäten zugeordnet wird, dass jedes Telegramm (22, 24) zumindest mit einem Startsymbol (32, 36) beginnt und mit einem Endesymbol (34, 38) endet sowie dass eine laufende Übertragung eines ersten Telegramms (22) mit einer ersten Priorität durch ein zweites Telegramm (24) mit einer höheren, zweiten Priorität unterbrochen werden kann, indem die Übertragung des ersten Telegramms (22) angehalten wird, sodann zunächst das zweite Telegramm (24) mit seinem vorangestellten Startsymbol (32, 36) und einem abschließenden Endesymbol (34, 38) übertragen wird und schließlich die Übertragung des ersten Telegramms (22) fortgesetzt und mit einem Endesymbol (34) abgeschlossen wird.

## Beschreibung

Die Erfindung betrifft ein Verfahren zum Betrieb eines Automatisierungsgeräts, insbesondere eines Antriebssystems als ein Beispiel für ein Automatisierungsgerät, zur Priorisierung von seriellen Telegrammen bei einer Datenübertragung von dem Automatisierungsgerät zu einem anderen Automatisierungsgerät oder zu einem sonstigen Empfänger und damit also auch ein Verfahren zur Übertragung von Daten mit einer Priorisierung von seriellen Telegrammen.

Der Begriff Automatisierungsgerät umfasst sämtliche Geräte, Einrichtungen oder Systeme, also neben z.B. Steuerungen, wie speicherprogrammierbaren Steuerungen, Prozessrechnern, (Industrie-)Computern, dezentralen Peripheriegeräten, Bedien-und Beobachtungsgeräten und dergleichen auch Antriebs- oder sonstige Aggregatsteuerungen, Frequenzumrichter und Ähnliches, wie sie zur Steuerung, Regelung, Überwachung und/oder Beeinflussung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

Derartige Automatisierungsgeräte sind an sich bekannt. Die Anmelderin der vorliegenden Erfindung entwickelt und vertreibt z.B. unter der Marke SIMATIC Automatisierungsgeräte in Form von speicherprogrammierbaren Steuerungen, dezentralen Peripheriegeräten, Bedien- und Beobachtungsgeräten usw. sowie unter den Marken SINUMERIK und SINAMICS Antriebs- oder sonstige Aggregatsteuerungen, Frequenzumrichter und Ähnliches. Bei derartigen Automatisierungsgeräten ist zum Transfer von Daten von oder zum jeweiligen Automatisierungsgerät eine kommunikative Verbindung des jeweiligen Automatisierungsgeräts mit zumindest einem anderen Automatisierungsgerät, also z.B. einer übergeordneten Steuerung oder dergleichen, bekannt. Weiterhin ist bekannt, dass im Rahmen einer solchen kommunikativen Verbindung das jeweilige Automatisierungsgerät Daten an das zumindest eine andere Automatisierungsgerät in Form von Telegrammen übermittelt und dass eine Mehrzahl von Telegrammen nacheinander übertragen werden.

Nachteilig bei einer Datenübertragung mit seriellen Schnittstellen und den dabei eingesetzten Protokollen ist, dass Datentelegramme nacheinander gesendet werden. Dabei muss ein Telegramm vollständig gesendet werden, bevor das nächste Telegramm starten kann. Eine Priorisierung kann nur erfolgen, bevor ein Telegramm gestartet wurde. Wenn während einer laufenden Übertragung neue Daten mit höherer Priorität zum Versenden anstehen, muss das Ende der laufenden Übertragung abgewartet werden, bis die hochprioren Daten gesendet werden können. Für die hochprioren Daten entsteht ein unerwünschter Zeitverzug. In Systemen mit Echtzeitanforderungen begrenzt dieser Effekt die Qualität der Echtzeitübertragung und damit unter Umständen die Performance des gesamten Systems.

Eine Aufgabe der Erfindung besteht entsprechend darin, ein Betriebsverfahren anzugeben, mit dem ein Senden von hochprioren Daten ohne Zeitverzug oder zumindest ohne nennenswerten Zeitverzug möglich ist.

Diese Aufgabe wird erfindungsgemäß mit einem Verfahren mit den Merkmalen des Anspruchs 1 gelöst. Dazu ist bei einem Verfahren zum Betrieb eines mit zumindest einem anderen Automatisierungsgerät kommunikativ verbundenen Automatisierungsgeräts, wobei das Automatisierungsgerät zumindest an das andere Automatisierungsgerät über die kommunikative Verbindung Daten in Form von Telegrammen übermittelt, vorgesehen, dass jedem Telegramm direkt oder indirekt eine von zumindest zwei Prioritäten zugeordnet wird, dass jedes Telegramm zumindest mit einem Startsymbol beginnt und mit einem Endesymbol oder dergleichen endet sowie dass eine laufende Übertragung eines ersten Telegramms mit einer ersten Priorität durch ein zweites Telegramm mit einer höheren, zweiten Priorität unterbrochen werden kann, indem die Übertragung des ersten Telegramms angehalten wird, sodann zunächst das zweite Telegramm mit seinem vorangestellten Startsymbol und einem abschließenden Endesymbol übertragen wird und schließlich die Übertragung des ersten Telegramms fortgesetzt und mit einem Endesymbol oder dergleichen abgeschlossen wird.

Der Vorteil der Erfindung besteht darin, dass durch das Anhalten der Übertragung des ersten Telegramms mit der ersten (niedrigen) Priorität die Übertragung des zweiten Telegramms mit der zweiten (höheren) Priorität unmittelbar begonnen werden kann, ohne dass zuvor ein Abschluss der Übertragung des ersten Telegramms abgewartet werden muss. Die Übertragung des zweiten Telegramms mit der zweiten, höheren Priorität kann also quasi unmittelbar, jedenfalls ohne merklichen Zeitver-zug, beginnen, wenn dem Automatisierungsgerät eine Notwendigkeit zur Übertragung von Daten mit einer Priorität signalisiert wird, die höher ist als die Priorität eines aktuell in der Übertragung befindlichen Telegramms. Die jeweilige Priorität ist einem Telegramm dabei direkt oder indirekt zugeordnet, also z.B. indem das Telegramm eine Kennung umfasst, die die Priorität kodiert (direkte Zuordnung) oder indem das Telegramm von dem den Zugriff auf das jeweilige Kommunikationsmedium, also die kommunikative Verbindung, verwaltenden Softwareprogramm mit einer entsprechenden Priorität eingeplant wird, ohne dass das zur Übertragung über das Kommunikationsmedium vorgesehene Telegramm selbst prioritätsbezogene Daten beinhaltet (indirekte Zuordnung). Indem nach dem Anhalten der Übertragung des ersten Telegramms die Übertragung des zweiten Telegramms mit dessen vorangestelltem Startsymbol beginnt, ist auf Empfängerseite die Unterbrechung der Übertragung des ersten Telegramms und der Beginn der Übertragung des zweiten Telegramms eindeutig erkennbar. Die vom ersten und vom zweiten Telegramm umfassten Daten bleiben damit unterscheidbar. Indem das zweite Telegramm, das die Übertragung des ersten Telegramms unterbrochen hat, mit einem Endesymbol abschließt, ist auf Empfängerseite auch eindeutig das Ende der Übertragung des zweiten Telegramms erkennbar, so dass die daran anschließende Fortsetzung der Übertragung des ersten Telegramms geeignet ausgewertet und die dabei empfangenen Daten mit den bis zum Beginn der Übertragung des zweiten Telegramms bereits empfangenen Daten kombiniert werden können, so dass im Ergebnis nach Abschluss der Übertragung des ersten Telegramms auch dessen Daten vollständig und in korrekter Zuordnung vorliegen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass für niederpriore Telegramme ein erstes Startsymbol und für hochpriore Telegramme ein zweites Startsymbol verwendet wird und dass für niederpriore Telegramme und für hochpriore Telegramme ein gleiches Endesymbol verwendet wird. Unterschiedliche Startsymbole für Telegramme unterschiedlicher Prioritäten machen diese besonders einfach eindeutig unterscheidbar und erleichtern die Zuordnung der nach dem jeweiligen Startsymbol übertragenen Daten. Als Endesymbol kann auch bei einer Übertragung von Telegrammen mit unterschiedlicher Priorität ein gleiches Endesymbol verwendet werden, weil die Zuordnung des Endesymbols zu jeweils einem Startsymbol immer eindeutig ist, etwa vergleichbar mit Klammeroperatoren in der Mathematik. Genauso wie durch Klammern in der Mathematik eine Gruppierung von Termen erfolgt, erfolgt hier durch Start- und Endesymbole eine Gruppierung der jeweils einzelnen Telegrammen mit ggf. unterschiedlichen Prioritäten zugehörigen Daten. Das Beispiel aus der Mathematik macht auch deutlich, dass grundsätzlich sogar bei einer Übertragung von Telegrammen mit unterschiedlichen Prioritäten gleiche Startsymbole in Betracht kommen, und zwar auch dann, wenn einfach oder mehrfach eine Unterbrechung einer Übertragung eines ersten Telegramms durch ein zweites Telegramm und eventuelle weitere Telegramme erfolgt. Unterschiedliche Startsymbole machen allerdings die Zuordnung einfacher, etwa vergleichbar mit einer optisch einfacheren Zuordnung, wenn in mathematischen Termen Klammeroperatoren durch unterschiedliche Klammern - runde Klammern, eckige Klammer, geschweifte Klammern, usw. - dargestellt sind.

Eine besondere Ausführungsform des Verfahrens zeichnet sich dadurch aus, dass für niederpriore Telegramme ein erstes Paar von Start- und Endesymbolen und für hochpriore Telegramme ein zweites Paar von Start- und Endesymbolen verwendet wird. Wenn bei Anwendung des Verfahrens mehr als zwei Prioritäten für die zu übertragenden Telegramme vorgesehen oder zugelassen sind, kommen auch entsprechend der Anzahl der vorgesehenen Prioritäten weitere Paare von Start- und Endesymbolen oder zumindest unterschiedliche Startsymbole in Betracht.

Das Verfahren wie hier und nachfolgend beschrieben kommt speziell für serielle Verbindungen als kommunikative Verbindung, bei denen die Datenblöcke nach einem seriellen Datenübertragungsprotokoll übermittelt werden, in Betracht.

Für eine Kodierung der Telegramme ist in einer besonderen Ausführungsform des Verfahrens z.B. eine 8B/10B-Kodierung vorgesehen und für das oder jedes Start- und Endesymbol ein vorgegebener oder vorgebbarer Wert in dieser Kodierung. Anstelle der 8B/10B-Kodierung kann grundsätzlich auch jede andere Kodierung, die z.B. für einen Gleichspannungsausgleich oder für eine Möglichkeit zu einer Taktrückgewinnung aus dem Datensignal vorgesehen ist, verwendet werden. Andere Kodierverfahren wie z.B. 64B/66B und dergleichen kommen grundsätzlich genauso in Betracht.

Die oben genannte Aufgabe wird auch mit einem Automatisierungsgerät der eingangs genannten Art, insbesondere einem Antriebssystem, gelöst, das nach dem Verfahren wie hier und im Folgenden beschrieben arbeitet und dazu Mittel zur Durchführung des Verfahrens umfasst. Das Verfahren ist dabei bevorzugt in Software oder in Software und Firmware implementiert. Die Erfindung ist damit einerseits auch ein Computerprogramm mit durch einen Computer ausführbaren Programmcodeanweisungen zur Implementierung des Verfahrens und andererseits ein Speichermedium mit einem derartigen Computerprogramm sowie schließlich auch ein Automatisierungsgerät, in dessen Speicher oder in dessen dafür vorgesehene Hardware, z.B. in Form eines ASICs, als Mittel zur Durchführung des Verfahrens und seiner Ausgestaltungen ein solches Computerprogramm geladen oder ladbar ist. Das Verfahren kann auch in Hardware implementiert sein, z.B. in Form eines um eine Funktionalität entsprechend dem hier vorgeschlagenen Verfahren erweiterten Schnittstellenbausteins für ein serielle Verbindung. Die Erfindung ist damit auch ein solcher Schnittstellenbaustein oder ein Automatisierungsgerät der eingangs genannten Art mit einem solchen Schnittstellenbaustein.

Nachfolgend wird ein Ausführungsbeispiel der Erfindung anhand der Zeichnung näher erläutert. Einander entsprechende Gegen¬stände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: in schematisch vereinfachter Darstellung ein Automatisierungssystem mit zumindest zwei untereinander kommunikativ verbundenen Automatisierungsgeräten,
- FIG 2: eine schematisch vereinfachte Darstellung zur Illustration der Problematik, mit der sich die Erfindung befasst,
- FIG 3: schematisch vereinfacht einen bisherigen Lösungsansatz für die in FIG 2 gezeigte Problematik,
- FIG 4: schematisch vereinfacht eine Darstellung der der Erfindung zugrundeliegenden Idee,
- FIG 5: ein Telegramm mit entsprechend einer vorgegeben Kodierung in Symbole umgesetzten Nutzdaten, die in ein Start- und ein Endesymbol in derselben Kodierung eingebettet sind,
- FIG 6: eine detailliertere Darstellung der Situation gemäß FIG 2 mit Telegrammen mit in Symbole umgesetzten Nutzdaten und Kontrollsymbolen zur Gruppierung der Nutzdaten,
- FIG 7: und
- FIG 8: eine Verwendung unterschiedlicher Start- und Endesymbole für hoch- und niederpriore Daten für die bereits in FIG 6 gezeigten Daten sowie
- FIG 9: eine Übertragung eines eine laufende Übertragung eines ersten Telegramms mit einer ersten Priorität unterbrechende Übertragung eines zweiten Telegramms mit einer höheren, zweiten Priorität.

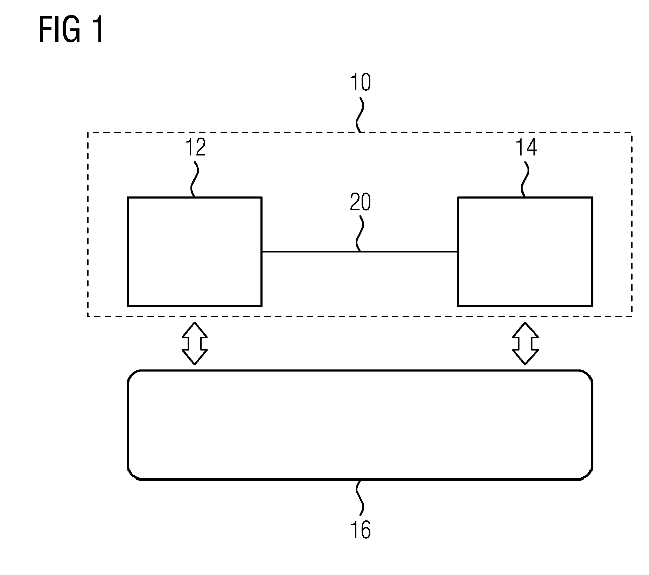

FIG 1 zeigt schematisch stark vereinfacht ein Automatisierungssystem 10 mit einer Mehrzahl von Automatisierungsgeräten 12, 14, die zusammen in an sich bekannter Art und Weise einen nicht näher dargestellten technischen Prozess 16 steuern und/oder überwachen und dazu über eine im Folgenden als kommunikative Verbindung 20 bezeichnete Datenleitung kommunikativ verbunden sind. Als kommunikative Verbindung 20 kommt dabei z.B. eine serielle Verbindung in Betracht, so dass die beiden dargestellten Automatisierungsgeräte 12, 14 zur Verwendung der seriellen Verbindung entsprechende serielle Schnittstellen und entsprechende Kommunikationstreiber zur Umsetzung des seriellen Datenübertragungsprotokolls verfügen (sämtlich nicht dargestellt). Als Automatisierungssystem 10 kommt jede Art von Automatisierungssystem in Betracht, also zum Beispiel ein verteiltes Automatisierungssystem zur Steuerung und/oder Überwachung eines technischen Produktionsprozesses oder zur Steuerung und/oder Überwachung chemischer oder sonstiger Prozesse wie auch ein Automatisierungssystem in Form sogenannter Produktionsinseln, also zum Beispiel eine Werkzeugmaschine, die zur Ansteuerung der davon umfassten Achsen und oder Aggregate einzelne, kommunikativ verbundene Automatisierungsgeräte 12, 14 umfasst.

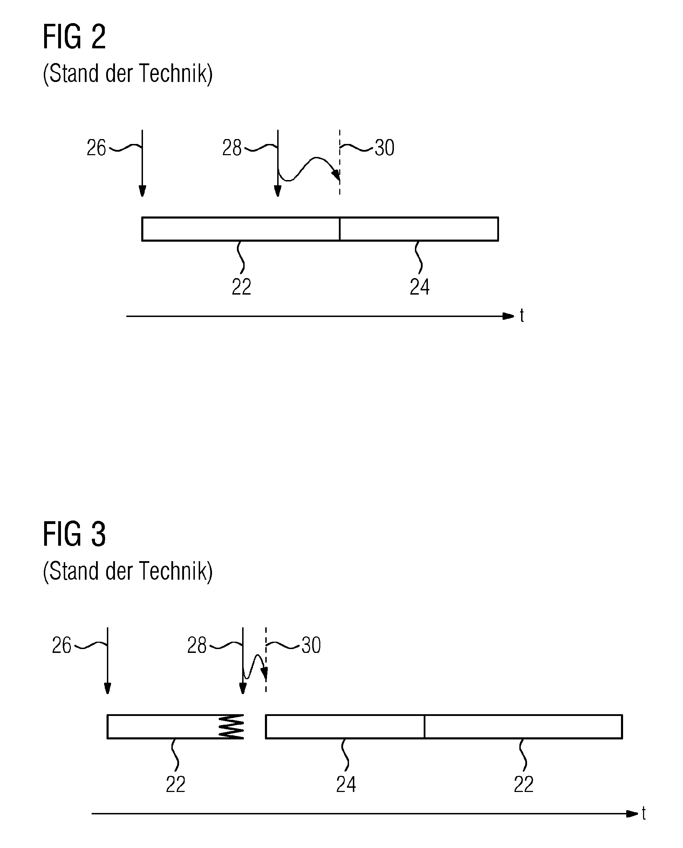

FIG 2 zeigt eine schematisch vereinfachte Darstellung zur Illustration der Problematik, mit der sich die Erfindung befasst. Über die kommunikative Verbindung 20 (FIG 1) können zwischen den Automatisierungsgeräten 12, 14 (FIG 1) Telegramme 22, 24 übermittelt werden. Während eines Zeitabschnitts kann jeweils nur ein Telegramm 22, 24 übertragen werden. FIG 2 zeigt eine Situation, bei der zu einem ersten Zeitpunkt 26 eine erste Datenmenge von einem Automatisierungsgerät 12, 14 an ein anderes Automatisierungsgerät 12, 14 zu übertragen. Die Übertragung dieser ersten Datenmenge erfolgt mit einem Telegramm, das im Folgenden zur Unterscheidung als erstes Telegramm 22 bezeichnet wird. Wenn während der Dauer der Übertragung des ersten Telegramms 22 zu einem zweiten Zeitpunkt 28 weitere Daten zur Übertragung bereit gestellt werden, kann deren Übertragung in einem zweiten Telegramm 24 erst beginnen, wenn die Übertragung des ersten Telegramms 22 abgeschlossen ist. Der tatsächliche Zeitpunkt, zu dem die Übertragung des zweiten Telegramms 24 beginnen kann, ist in FIG 2 als dritter Zeitpunkt 30 eingezeichnet und die Zeitdifferenz zwischen dem zweiten Zeitpunkt 28 und dem dritten Zeitpunkt 30 ist ein mitunter unerwünschter Zeitverzug, der speziell in Echtzeitsystemen nachteilig ist, weil die Größe des Zeitverzugs im Wesentlichen unvorhersehbar ist und z.B. von der Dauer des ersten Telegramms 22 abhängig ist und damit die Performance des Echtzeitsystems insgesamt negativ beeinflusst.

Dieses Problem ist im Stand der Technik grundsätzlich bekannt und FIG 3 zeigt schematisch vereinfacht einen bisherigen Lösungsansatz. Danach wird, nachdem zu einem ersten Zeitpunkt 26 die Übertragung eines ersten Telegramms 22 begonnen wurde, wenn zu einem zweiten Zeitpunkt 28 Daten verfügbar werden, die eine höhere Priorität besitzen als die mit dem ersten Telegramm 22 übertragenen Daten (hochpriore Daten), die Übertragung des ersten Telegramms 22 unterbrochen und nach einem aus der Unterbrechung der Übertragung des ersten Telegramms 22 resultierenden kurzen Zeitverzug zu einem dritten Zeitpunkt 30 die Übertragung des zweiten Telegramms 24 mit den hochprioren Daten begonnen. Im Anschluss an die Übertragung des zweiten Telegramms 24 mit den hochprioren Daten wird das zuvor unterbrochene erste Telegramm 22 mit den im Vergleich niederprioren Daten erneut gesendet. Dieser Ansatz ist insofern noch nicht optimal, als aus der Unterbrechung der Übertragung des ersten Telegramms 22 mit den niederprioren Daten immer noch ein merklicher Zeitverzug resultiert und darüber hinaus auch insofern, als aufgrund der im Anschluss an die Übertragung der hochprioren Daten erforderliche erneute Übertragung der niederprioren Daten in unnötiger Weise Bandbreite des Kommunikationssystems benutzt wird und zudem ein unnötig hoher Verzug bei der Übertragung der niederprioren Daten resultiert.

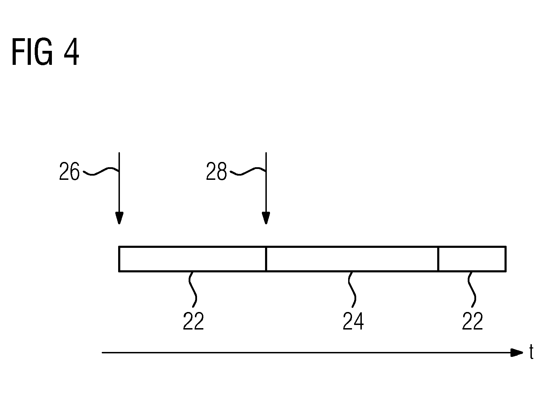

FIG 4 zeigt schematisch vereinfacht die der Erfindung zugrundeliegende Idee. Danach wird beginnend mit einem ersten Zeitpunkt 26, zu dem erste Daten, also z.B. niederpriore Daten zur Übertragung verfügbar werden, mit der Übertragung eines ersten Telegramms 22 mit niederprioren Daten begonnen. Sobald während der Übertragung des ersten Telegramms 22 zu einem zweiten Zeitpunkt 28 hochpriore Daten verfügbar werden, wird die Übertragung des ersten Telegramms 22 angehalten/unter¬brochen und unmittelbar mit der Übertragung der hochprioren Daten in einem zweiten Telegramm 24 begonnen. Nach Abschluss der Übertragung der hochprioren Daten in dem zweiten Telegramm 24 wird der zum Unterbrechungszeitpunkt (zweiter Zeitpunkt 28) noch nicht übertragene Teil der niederprioren Daten des ersten Telegramms 22 übertragen.

Der Ansatz gemäß der Erfindung macht sich dabei zunutze, dass moderne serielle Übertragungsverfahren auf Symbolen basieren. Hierbei werden die Sendedaten gemäß einer Umsetzungstabelle in Symbole umgesetzt. Durch die Umsetzung wird z.B. erreicht, dass genügend Flankenwechsel im Signalstrom vorhanden sind, um den jeweiligen Übertragungstakt zurückzugewinnen. Eine weit verbreitete Kodierung ist die sogenannte 8B/10B-Ko¬die¬rung. Bei dieser Kodierung werden jeweils acht Bit der Nutzdaten in ein zehn Bit breites Symbol auf der Leitung umgesetzt. Neben den 256 Symbolen für die Darstellung der 256 möglichen Kombinationen der 8-Bit-Nutzdaten werden weitere Symbole definiert, die zur Signalisierung von Kontrollinformationen dienen können. Bei einer 8B/10B-Kodierung sind zumindest zwölf Kontrollsymbole möglich, deren Bedeutung in einem auf einer seriellen Übertragung basierenden Bussystem frei zugeordnet werden kann. Üblicherweise werden Kontrollsymbole unter anderem als Kennung von Telegrammanfang und Telegrammende sowie zur Kennzeichnung von Sendepausen verwendet.

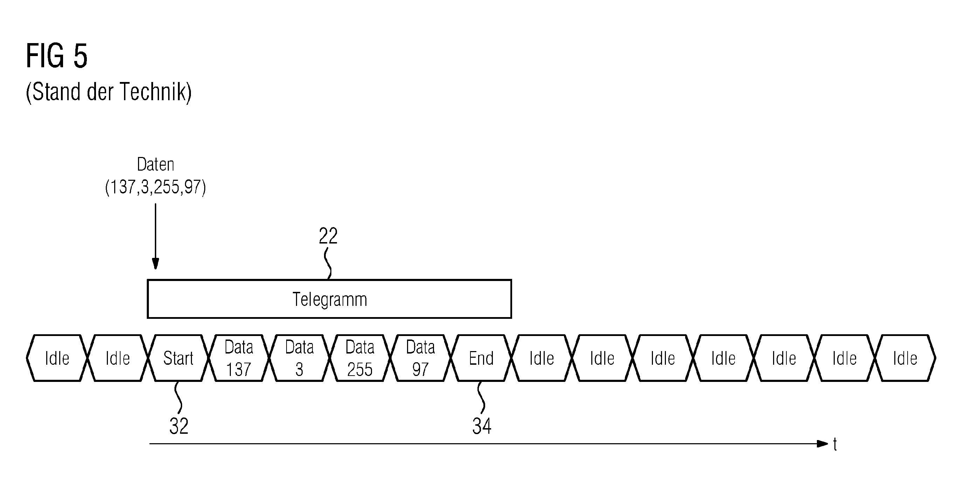

FIG 5 zeigt insofern ein Telegramm 22 mit Nutzdaten in einem Umfang von vier Symbolen (in der Darstellung willkürlich gewählt, nämlich "137", "3", "255", "97"). Das Telegramm 22 ergibt sich dabei aus diesen in ein Startsymbol 32 und ein Endesymbol 34 eingeschlossenen Nutzdaten.

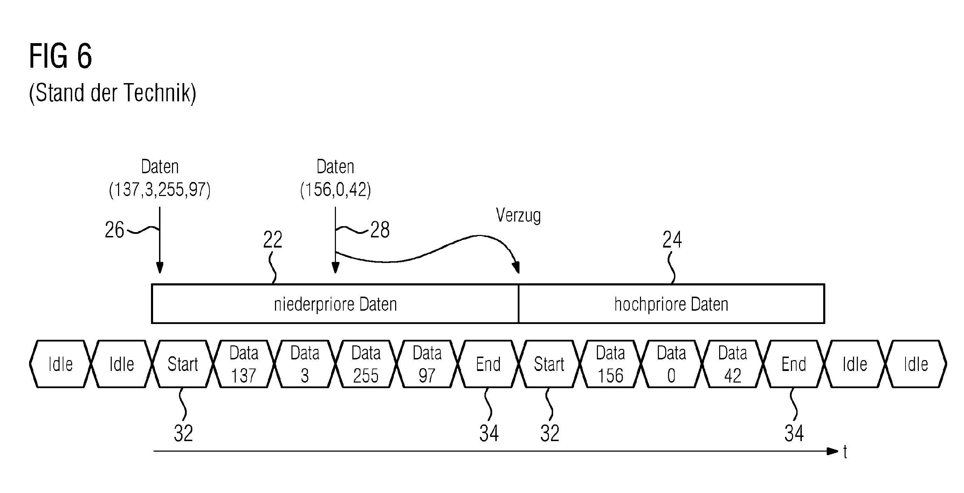

FIG 6 zeigt auf dieser Basis eine detailliertere Darstellung der Situation gemäß FIG 2. Das erste Telegramm 22 mit seinen niederprioren Daten ("137, 3, 255, 97") wird - eingebettet in ein Start- und Endesymbol 32, 34 - vollständig ab einem ersten Zeitpunkt 26 gesendet, obwohl während der Dauer der Über- tragung des ersten Telegramms 22 zu einem zweiten Zeitpunkt 28 hochpriore Daten ("156, 0, 42"), verfügbar werden, die erst nach Abschluss der Übertragung des ersten Telegramms 22 mit einem zweiten, durch eigene Start- und Endesymbole 32, 34 begrenzten zweiten Telegramm 24 übertragen werden.

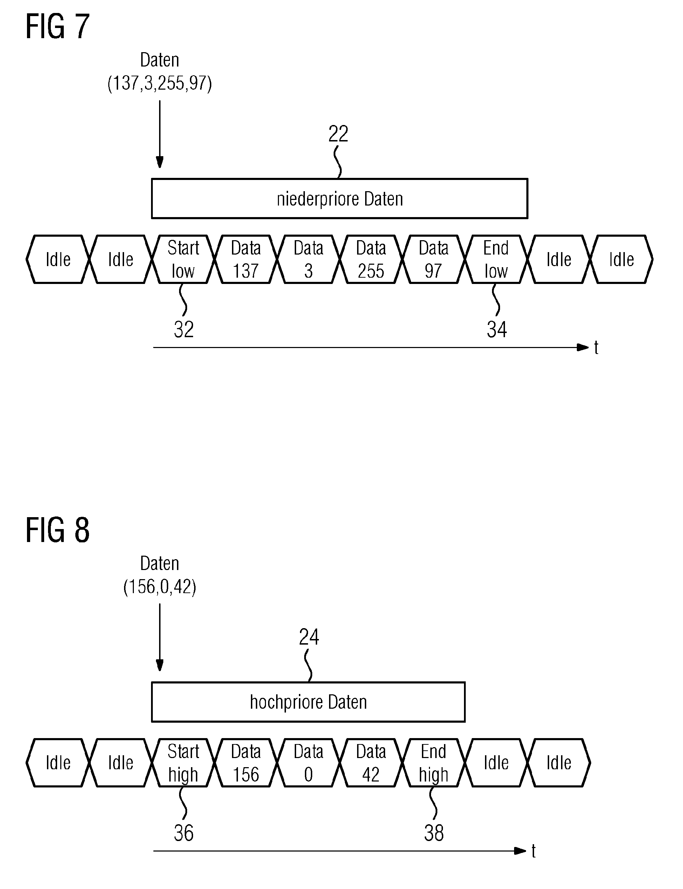

Beim Ansatz gemäß der Erfindung ist in einer speziellen Ausführungsform vorgesehen, dass für hoch- und niederpriore Daten und die daraus resultierenden und die zu deren Übertragung generierten Telegramme 22, 24 unterschiedliche Start-und Endesymbole 32, 34 definiert werden, die im Folgenden zur Unterscheidung als erstes Startsymbol 32 und erstes Endesymbol 34 (FIG 7) bzw. zweites Startsymbol 36 und zweites Endesymbol 38 (FIG 8) bezeichnet werden.

Die Darstellung in FIG 7 und FIG 8 zeigt dies für die bereits in FIG 6 exemplarisch verwendeten Daten, nämlich die niederprioren Daten "137, 3, 255, 97", und das für deren Übertragung generierte erste Telegramm 22 mit einem ersten Startsymbol 32 und einem ersten Endesymbol 34 und die hochprioren Daten "156, 0, 42" und das für deren Übertragung generierte zweite Telegramm 24 mit einem zweiten Startsymbol 36 und einem zweiten Endesymbol 38. Die unterschiedlichen Start- und Endesymbole 32, 34; 36, 38 sind in der Darstellung in FIG 7 symbolisch als "Start low", "End low" (FIG 7) und "Start high", "End high" (FIG 8) bezeichnet.

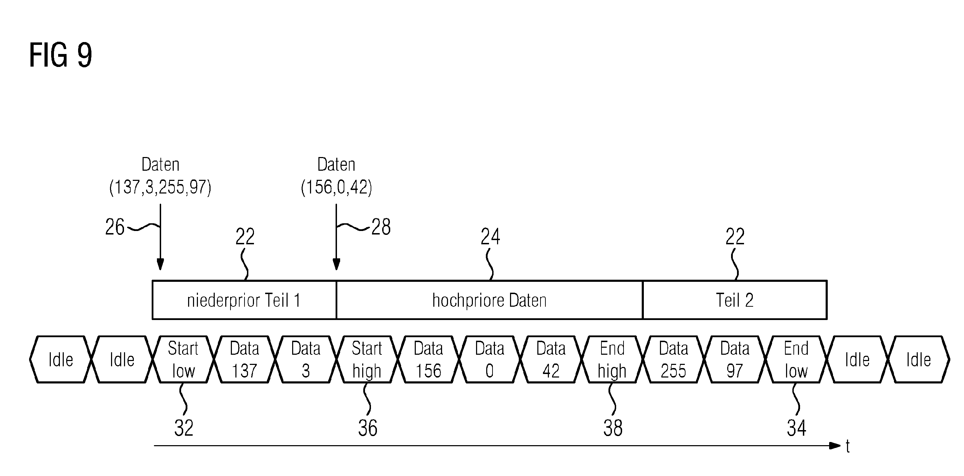

FIG 9 zeigt auf dieser Basis nun die Übertragung eines eine laufende Übertragung eines ersten Telegramms 22 mit einer ersten Priorität unterbrechende Übertragung eines zweiten Telegramms 24 mit einer höheren, zweiten Priorität. Nachdem zu einem ersten Zeitpunkt 26 die Übertragung des ersten Telegramms 22 mit dessen erstem Startsymbol 32 ("Start low") begonnen wurde, wird diese Übertragung zu einem zweiten Zeitpunkt 28, zu dem hochpriore Daten verfügbar werden, für die Übertragung eines aus den hochprioren Daten resultierenden zweiten Telegramms 24 unterbrochen, indem zunächst das zweite Telegramm 24 mit seinem vorangestellten zweiten Startsymbol 36 ("Start high") und einem abschließenden zweiten Endesymbol 38 ("End high") übertragen wird und schließlich die Übertragung des ersten Telegramms 22 fortgesetzt und mit einem ersten Endesymbol 34 ("End low") abgeschlossen wird. Dadurch ist erreicht, dass wenn während der Übertragung von niederprioren Daten (erstes Telegramm 22) neue - hochpriore - Daten anstehen, nicht mehr auf das Ende der Übertragung des ersten Telegramms 22 gewartet werden muss, sondern unmittelbar mit der Übertragung eines aus den hochprioren Daten resultierenden zweiten Telegramms 24 begonnen werden kann. Durch die speziellen Start- und Endesymbole 32, 34; 36, 38 ist eine eindeutige Unterscheidbarkeit der Telegramme 22, 24 und der davon umfassten Daten gegeben. Die Unterscheidbarkeit bleibt, z.B. bei einem längeren ersten Telegramm 22 ohne Weiteres auch bestehen, wenn das erste Telegramm 22 mehrfach durch zweite Telegramme 24 unterbrochen wird oder wenn das zweite Telegramm 24 durch ein weiteres Telegramm mit einer nochmals höheren Priorität unterbrochen wird und auch dieses wieder unterbrochen wird, usw.. Die Verwendung unterschiedlicher Start- und Endesymbole 32, 34; 36, 38 erleichtert die Zuordnung der davon jeweils begrenzten Nutzdaten. Tatsächlich sind, wenn der Aspekt der erleichterten Zuordenbarkeit außer Acht gelassen wird, unterschiedliche Start- und Endesymbole 32, 34; 36, 38 nicht erforderlich. Z.B. kann für zwei oder mehr Prioritäten ohne Weiteres das gleiche Endesymbol 34 verwendet werden, da ein Endesymbol 34 immer zu dem unmittelbar vorangehenden Startsymbol 32, 36 gehört und die davon eingeschlossenen Nutzdaten damit zu dem Telegramm 22, 24, das mit dem betreffenden Startsymbol 32, 36 begonnen wurde. Tatsächlich sind nicht einmal unterschiedliche Startsymbole 32, 36 erforderlich, denn jedes Startsymbol 32 definiert den Beginn der Übertragung genau eines Telegramms 22, 24 und bei jeder Detektion eines Startsymbols 32 kann zur Auswertung der empfangenen Daten auf Empfängerseite ohne Weiteres ein neuer Datensatz zum Zwischenspeichern der zu dem mit diesem Startsymbol 32 begonnenen Telegramm 22, 24 gehörigen Daten begonnen werden. Dann können sukzessive nach Detektion der jeweiligen Endesymbole 34 die einzelnen Datensätze abgeschlossen und vorangehende Datensätze bis zum Erhalt von deren Endesymbol 34 aufgefüllt werden.

Der Ansatz gemäß der Erfindung ermöglicht eine Unterscheidung von Daten oder Telegrammen 22, 24 unterschiedlicher Priorität bereits auf der untersten Übertragungsebene. Eine bisher unvermeidliche Verzögerung beim Übertragen eines Telegramms 24 mit hochprioren Daten erst im Anschluss an den Abschluss einer Übertragung eines Telegramms 22 mit niederprioren Daten tritt nicht mehr auf. Die Kodierung der Daten für eine Übermittlung insbesondere gemäß einem seriellen Kommunikationsprotokoll erfolgt heutzutage in hochintegrierten Bausteinen. Der Ansatz gemäß der Erfindung und sämtliche Ausgestaltungen kann vollständig in diese Bausteine integriert werden. Externe Bauteile sind nicht erforderlich. Für die Umsetzung des hier beschriebenen Verfahrens fallen daher keine nennenswerten Kosten an. Der sogenannte Mikrocode für einen solchen hochintegrierten Baustein, also z.B. einen ASIC oder dergleichen, ist ein Beispiel für ein Computerprogramm mit Programmcodemitteln, um alle Schritte des Verfahrens und seiner Ausgestaltungen wie hier beschrieben auszuführen. Ein nach dem Verfahren arbeitendes Automatisierungsgerät 12, 14, in dem das hier beschriebene Verfahren oder eines seiner Ausgestaltungen implementiert ist, weist in an sich bekannter Art eine Verarbeitungseinheit in Form von oder nach Art eines Mikroprozessors und einen Speicher auf, in den ein Computerprogramm zur Ausführung des Verfahrens und etwaiger Ausführungen geladen ist oder einen hochintegrierten Baustein, also z.B. einen Schnittstellenbaustein, der für den Zugriff auf die kommunikative Verbindung 22 gleichzeitig als Verarbeitungseinheit und aufgrund des integrierten Mikrocodes auch als Speicher für ein in Form des Mikrocodes umgesetzten Computerprogramms fungiert.

Einzelne im Vordergrund stehende Aspekte der hier eingereichten Beschreibung lassen sich damit kurz wie folgt zusammenfassen: Angegeben wird allgemein ein Datenübertragungsverfahren oder im Speziellen ein Verfahren zum Betrieb eines mit zumindest einem anderen Automatisierungsgerät 14 kommunikativ verbundenen Automatisierungsgeräts 12, wobei das Automatisierungsgerät 12 zumindest an das andere Automatisierungsgerät 14 über die kommunikative Verbindung Daten in Form von Telegrammen 22, 24 übermittelt, wobei sich das Verfahren dadurch auszeichnet, dass jedem Telegramm 22, 24 direkt oder indirekt eine von zumindest zwei Prioritäten zugeordnet wird, dass jedes Telegramm 22, 24 zumindest mit einem Startsymbol 32, 36 beginnt und mit einem Endesymbol 34, 38 endet sowie dass eine laufende Übertragung eines ersten Telegramms 22 mit einer ersten Priorität durch ein zweites Telegramm 24 mit einer höheren, zweiten Priorität unterbrochen werden kann, indem die Übertragung des ersten Telegramms 22 angehalten wird, sodann zunächst das zweite Telegramm 24 mit seinem vorangestellten Startsymbol 32, 36 und einem abschließenden Endesymbol 34, 38 übertragen wird und schließlich die Übertragung des ersten Telegramms 22 fortgesetzt und mit einem Endesymbol 34 abgeschlossen wird.

## Patentansprüche

1. Verfahren zum Betrieb eines mit zumindest einem anderen Automatisierungsgerät (14) kommunikativ verbundenen Automatisierungsgeräts (12),
wobei das Automatisierungsgerät (12) zumindest an das andere Automatisierungsgerät (14) über die kommunikative Verbindung Daten in Form von Telegrammen (22, 24) übermittelt, **dadurch gekennzeichnet,**
**dass** jedem Telegramm (22, 24) direkt oder indirekt eine von zumindest zwei Prioritäten zugeordnet wird,
**dass** jedes Telegramm (22, 24) zumindest mit einem Startsymbol (32, 36) beginnt und mit einem Endesymbol (34, 38) endet sowie
**dass** eine laufende Übertragung eines ersten Telegramms (22) mit einer ersten Priorität durch ein zweites Telegramm (24) mit einer höheren, zweiten Priorität unterbrochen werden kann, indem
die Übertragung des ersten Telegramms (22) angehalten wird, sodann zunächst das zweite Telegramm (24) mit seinem vorangestellten Startsymbol (32, 36) und einem abschließenden Endesymbol (34, 38) übertragen wird und
schließlich die Übertragung des ersten Telegramms (22) fortgesetzt und mit einem Endesymbol (34) abgeschlossen wird.

2. Verfahren nach Anspruch 1, wobei für niederpriore Telegramme (22) ein erstes Startsymbol (32) und für hochpriore Telegramme (24) eine zweites Startsymbol (36) verwendet wird und wobei für niederpriore Telegramme (22) und für hochpriore Telegramme (24) ein gleiches Endesymbol (34) verwendet wird.

3. Verfahren nach Anspruch 1, wobei für niederpriore Telegramme (22) ein erstes Paar von Start- und Endesymbolen (32, 34) und für hochpriore Telegramme (24) eine zweites Paar von Start- und Endesymbolen (36, 38) verwendet wird.

4. Verfahren nach einem der Ansprüche 2 oder 3, wobei bei mehr als zwei Prioritäten zusätzliche, jeweils einer Priorität zugeordnete Startsymbole (32, 36) bzw. Start- und Endesymbole (32, 34; 36, 38) verwendet werden.

5. Verfahren nach einem der vorangehenden Ansprüche, wobei die kommunikative Verbindung eine serielle Verbindung ist und wobei die Telegramme (22, 24) nach einem seriellen Datenübertragungsprotokoll übermittelt werden.

6. Verfahren nach einem der vorangehenden Ansprüche, wobei für eine Kodierung der Telegramme eine 8B/10B-Kodierung verwendet wird und wobei für das oder jedes Start- und Endesymbol (32, 34; 36, 38) ein vorgegebener oder vorgebbarer Wert in dieser Kodierung verwendet wird.

7. Computerprogramm mit Programmcodemitteln, um alle Schritte von jedem beliebigen der Ansprüche 1 bis 6 durchzuführen, wenn das Programm auf einem Automatisierungsgerät (12, 14) zur Steuerung, Überwachung und/oder Beeinflussung eines technischen Prozesses ausgeführt wird.

8. Automatisierungsgerät (12, 14) mit einer Verarbeitungseinheit und einem Speicher, in den ein Computerprogramm nach Anspruch 7 geladen ist, das im Betrieb des Gerätes durch die Verarbeitungseinheit ausgeführt wird.
